# FASCICULE DE BREVET EUROPEEN

(11) **EP 1 471 800 B1**
(45) Date de publication et mention de la délivrance du brevet: **28.09.2011**
(21) Numéro de dépôt: 03712241.3
(22) Date de dépôt: 14.01.2003
(51) Int. Cl.: A23K 1/18, A23K 1/16

(54) **COMPLEMENT ALIMENTAIRE UTILISABLE DANS LA FORMULATION D'ALIMENTS POUR ANIMAUX RUMINANTS**
NAHRUNGSZUSATZSTOFF FÜR WIEDERKÄUERFUTTERFORMULIERUNGEN
FOOD SUPPLEMENT USED IN FEED FORMULATIONS FOR RUMINANTS

(30) Priorité: 14.01.2002 FR 0200351
(43) Date de publication de la demande: 03.11.2004
(73) Titulaire: Innovation Developpement en Nutrition Animale - IDENA, 44880 Sautron (FR)
(72) Inventeur: AOUN, Massoud, F-44880 SAUTRON (FR); AMIAND, Georges, F-44500 La Baule (FR); GARRES, Patrick, F-44360 Saint Etienne de Montluc (FR); BOIDE, Patrick, F-44800 Saint Herblain (FR)
(74) Mandataire: Laget, Jean-Loup
(86) Numéro de dépôt international: PCT/FR2003/000108
(87) Numéro de publication internationale: WO 2003/056935

(56) Documents cités:
- EP-A- 0 139 545
- EP-A- 0 391 886
- EP-A- 0 826 303
- US-A- 2 849 317
- PATENT ABSTRACTS OF JAPAN vol. 1995, no. 07, 31 août 1995 (1995-08-31) & JP 07 107923 A (TAIYO KAGAKU CO LTD), 25 avril 1995 (1995-04-25)
- DATABASE WPI Section Ch, Week 199625 Derwent Publications Ltd., London, GB; Class B04, AN 1996-246903 XP002209300 & JP 08 099884 A (TAIYO KAGAKU KK), 16 avril 1996 (1996-04-16)
- MAKKAR H P S ET AL: "ARE QUILLAJA SAPONINS ANTINUTRITIVE TO RUMINANTS?" AMERICAN CHEMICAL SOCIETY. ABSTRACTS OF PAPER. AT THE NATIONAL MEETING, AMERICAN CHEMICAL SOCIETY, WASHINGTON, DC, US, vol. 1/2, no. 210, 20 août 1995 (1995-08-20), page AGFD186 XP001064868 ISSN: 0065-7727
- LEIVA, E., HALL, M.B., AND VAN HORN H.H.: "Performance of dairy cattle fed citrus pulp or corn products as sources of neutral detergent-soluble carbohydrates", JOURNAL OF DAIRY SCIENCE., vol. 83, 2000, pages 2866-2875, USAMERICAN DAIRY SCIENCE ASSOCIATION. CHAMPAIGN, ILLINOIS. ISSN: 0022-0302
- ESTELL, R.E. ET AL.: "Effects of volatile compounds on consumption of alfalfa pellets by sheep", JOURNAL OF ANIMAL SCIENCE, vol. 76, 1998, pages 228-233, USNEW YORK, NY ISSN: 0021-8812
- NOMEBKELA, S.W., ET AL.: "Dietary preferences in early lactation cows as affected by primary tastes and some common feed flavours", JOURNAL OF DAIRY SCIENCE., vol. 77, no. 8, 1994, pages 2393-2399, USAMERICAN DAIRY SCIENCE ASSOCIATION. CHAMPAIGN, ILLINOIS. ISSN: 0022-0302

## Description

La présente invention concerne un complément alimentaire utilisable dans la formulation d'aliments pour animaux ruminants.

Dans la nutrition des animaux ruminants, les besoins en acides aminés disponibles dans l'intestin sont proportionnels aux performances de ces animaux. Par exemple, une vache laitière haute productrice en début de lactation nécessite une part importante de protéine intestinale dite « by pass » qui peut représenter jusqu'à 50% des apports totaux de protéines dans la ration.

De ce fait, l'apport de sources de protéines intestinales pour des animaux ruminants à haut potentiel de production devient une pratique très courante pour supporter leur besoin important dans des périodes critiques telles que les débuts de la lactation ou la phase de croissance en production de viande.

Plusieurs techniques ont été ainsi développées pour augmenter la part de protéines intestinales des protéines alimentaires, telles qu'un traitement à la chaleur (extrusion, micronisation, toastage,...), un traitement au formaldéhyde et un traitement par des oligo-éléments (Zinc).

Du point de vue nutritionnel, l'idée d'apporter plus de protéines intestinales aux animaux ruminants génétiquement performants doit être accompagnée par une optimisation de l'activité ruminale en matière de protéosynthèse microbienne. En effet, il est bien défini qu'il existe un optimun de protéines dégradables et d'énergie disponible dans le rumen afin de maximiser le travail des micro-organismes du rumen et augmenter la digestibilité des rations et la quantité des protéines microbiennes.

Par ailleurs, une forte disponibilité des protéines alimentaires dans le rumen se traduit par un excès d'ammoniaque qui s'accumule dans le rumen, passe dans le sang pour être transformée en urée sanguine et devient toxique alors pour l'animal. On observe alors une baisse de l'ingestion, de l'immunité, des problèmes de reproduction, un transit rapide, une mauvaise valorisation de la ration et une baisse des performances.

De même, un excès d'énergie fermentescible sous forme d'amidon dans le rumen est à l'origine de forte concentration en acides gras volatils, d'une chute du pH ruminal et de l'accumulation d'acide lactique et de méthane. On observe alors la mise en place d'acidose ruminale, du durcissement de la paroi du rumen et une mauvaise absorption des nutriments, une chute de la digestibilité de la fibre, une chute de la matière grasse dans le lait, des problèmes de pieds tels que fourbure et des baisses de performances. L'apport d'amidon instestinal ou by-pass a démontré une meilleure efficacité quant à l'augmentation des performances des ruminants tant en production laitière qu'en production de viande avec une meilleure sécurité digestive.

Il est donc nécessaire de respecter un optimum de disponibilité ruminale des protéines et de l'énergie pour prévenir les accidents métaboliques, améliorer l'efficacité de la ration et augmenter les performances des animaux à haut potentiel génétique.

Aussi, on recherche actuellement une valorisation des matières premières protéiques entrant dans les aliments pour animaux ruminants, en particulier en essayant de respecter et maintenir un taux optimal des protéines instestinales sur la ration totale.

Dans Newbold C.J., 1999, (the effect of Crina on Nitrogen Metablism in vitro. Rowett Research services Ltd (A777)), on a pu observer une baisse de l'ammoniaque ruminal sur des cultures in-vitro, avec l'emploi d'huiles essentielles, d'acides aminés et de peptides spécifiques mélangés avec des souches de bactéries ruminales de vaches recevant une ration totale mélangée. On a mis ainsi en évidence que les huiles essentielles inhibent l'activité de désamination de bactéries spécifiques. Cette inhibition concerne les souches de bactéries identifiées par Russel et al, 1988 (Enrichment and isolation of a ruminal bacterium with a very high specific activity of ammonia production.App.Environ.Microbiol.54 : 872-877) et qui sont caractérisées par une très forte activité de désamination et, potentiellement, de production d'ammoniaque tout en étant également très sensible au monensin.

On a donc alors proposé des compléments alimentaires comportant au moins une huile essentielle de manière à réduire le catabolisme des bactéries protéolytiques impliquées dans la dégradation des protéines alimentaires dans le rumen et préserver les acides aminés alimentaires.

Cependant, malgré cette ou ces huiles essentielles entrant dans la formulation des aliments, on ne parvient pas à respecter et maintenir un rapport optimal protéines dégradables/protéines intestinales sur la ration totale.

Dans le domaine de la nutrition animale destinée à des animaux monogastriques, différents des animaux ruminants, on a proposé des compléments alimentaires comportant des dérivés comme les saponines.

Ainsi, dans le document JP-A-002209300, on propose un inhibiteur de croissance des bactéries Gram-négative qui contient un produit de décomposition d'un polysaccharide. Cet inhibiteur comporte donc un hydrolysat de polysaccharides et au moins un dérivé de saponine et/ou de tanins. Cet inhibiteur permet d'agir contre la prolifération des salmonelles dans les oeufs et la viande, en inhibant et/ou en supprimant la croissance des bactéries dans les animaux et oiseaux. Cet inhibiteur est ainsi donné lors de l'alimentation des animaux en lieu et place d'antibiotiques. Ce complément alimentaire a donc une visée préventive « thérapeutique » pour des animaux monogastriques.

Dans le document EP-A-0 826 303, la saponine de Camellia I est utilisée comme additif alimentaire pour améliorer les défenses immunitaires, la croissance des animaux et prévenir les maladies. Ainsi, cet additif est également présenté comme une alternative aux antibiotiques dans les aliments pour les animaux monogastriques tels.que les volailles, les porcs.

Dans le document EP-A-0 391 886 est décrit un aliment ou complément alimentaire qui contient des huiles essentielles telles que l'huile de racine d'angélique et de roseau, au moins une saponine non dangereuse pour la santé à l'exception d'une saponine stéroïde et au moins un correcteur de goût, de préférence une huile essentielle et tout composant biologiquement actif adéquat, vitamine, etc. Cette composition vise d'une part à influer favorablement sur le processus de la digestion des humains et des animaux monogastriques. Cette composition est libre de tout additif nocif tels que les stéroïdes ou les antibiotiques précédemment utilisés et présente cependant les mêmes avantages. En particulier, l'additif selon ce document garantit une réduction de l'ensemble de protéines atteignant 3 % à 5%, principalement dans les matières fourragères finales des animaux à engraisser très riches en protéines de nos jours ainsi qu'une augmentation du niveau de résultats, de la rentabilité de production et de la qualité de chair. On vise donc ici à obtenir un meilleur rendement avec un abaissement de la teneur en protéines totale ce qui permet un meilleur coût de production pour le fourrage auquel l'additif est mélangé et on obtient également une qualité améliorée de viande malgré la baisse de la teneur en protéines qui se trouve ainsi réduite. Par conséquent, l'additif permet de réduire la teneur en protéines de fourrages utilisés pour les animaux monogastriques cités, cochons, volailles.

Le document EP-0 139 545 décrit une préparation d'émulsions stables d'huiles essentielles et/ou de matières liposolubles dans de l'eau ou en milieu hydroalcoolique comportant en tant qu'émulsifiant des saponines. Cette préparation vise à la préparation de cosmétiques ou de boissons alcoolisés en tant qu'additif pour préparer une boisson émulsionnée.

De tels compléments ou additifs alimentaires ne permettent donc pas de régler les problèmes liés aux animaux ruminants, en particulier le maintien d'un rapport optimal protéines dégradables/protéines intestinales sur la ration totale, et à leur système de digestion particulier différent de celui des animaux monogastriques.

JP 07107923 décrit un aliment pour animaux domestiques. Cet aliment est destiné à inhiber les maladies infestieuses des animaux et comprend des saponines, ainsi que des substances antibactériennes telles que des huiles essentielles.

La publication de E. Leiva et al. (« performance of dairy cattle fed citrus pulp or corn products as sources of neutral detergent-soluble carbohydrates »,Journal of Dairy Science, p.2866-2875), décrit une étude portant sur l'effet de la modification des proportions en « glucides solubles dans un détergent neutre » (NDSC) dans l'alimentation de ruminants, notamment en termes de production et de composition du lait (abstract). Les NDSC sont présents notamment dans la pulpe de citron (à hauteur de 25 à 44%), la pulpe de citron comprend également 12 à 40% de sucre, 1% ou moins d'amidon.

La publication de R.E Estell et al. (« effects of volatile compounds on consumption of alfalfa pellets by sheep », Journal of animal science, page 228-231) concerne une étude sur l'effet de 6 composés volatils, dont le limonène (huile essentielle) sur la consommation de grains de luzerne par des agneaux. cette étude nous apprend que l'ajout de limonène aux grains de luzerne n'a pas d'effet discernable sur la consommation des agneaux.

Le document US 2,849,317 concerne un repas amélioré pour animal ruminant comprenant en plus de légumes (tels que de la luzerne, du soja), des feuilles d'arbre de créosotier (*larrea tridentata*). Il est décrit que ces légumes (aliment de base des animaux) comprennent des saponines qui ont pour effet d'attaquer les cellules du tractus gastro-intestinal de l'animal et de détériorer la perméabilité membranaire. Or cet effet est neutralisé par les feuilles de créosote qui sont capables de modifier l'action des saponines des légumes. Il est décrit également de rajouter de la pulpe de citron.

La publication de S.W.Nombekela et al. («dietary preferences in early lactation cows as affected by primary tastes and somme common feed flovors », Jounral of Dairy Science, page 2393-2399) concerne une étude sur la saveur/goût d'aliment pour vache et leur effet sur la consommation. L'alimentation peut ainsi comprendre du foin de luzerne et des additifs (anis, glutamate de sodium, saveur de luzerne...). L'étude conclut que l'ajout de ces additifs (anis...) afin d'améliorer la consommation d'aliments n'a pas été démontré.

Aussi, la présente invention a pour but de proposer une nouvelle utilisation d'un complément alimentaire telle que définie dans la revendication 1.

A cet effet l'invention a pour objet un complément alimentaire utilisable dans la formulation des aliments pour animaux ruminants, comprenant au moins une huile essentielle, caractérisé en ce qu'il comporte en outre au moins une saponine, ledit complément agissant dans le rumen de manière à maintenir un taux optimal de protéines ruminales se trouvant dans une plage de 55 à 65 % par rapport à l'ensemble des protéines dans la ration totale.

De manière avantageuse, le complément alimentaire selon l'invention est appliqué à différents taux d'incorporation en fonction du niveau de protéines intestinales recherché.

On a pu constater que le complément selon l'invention permet de réduire le catabolisme des bactéries protéolytiques impliquées dans la dégradation des protéines alimentaires dans le rumen, les acides aminés alimentaires étant ainsi préservés.

Avantageusement, de ce phénomène résulte également une baisse de l'ammoniaque ruminal, une baisse de l'ammoniaque et de l'urée dans le sang ainsi qu'une baisse de l'urée dans le lait produit par l'animal ruminant le cas échéant.

En outre, le complément selon l'invention permet une baisse de l'activité des protozoaires, voire leur élimination, présentes dans le milieu ruminal, ce qui a pour résultat un meilleur développement de la population bactérienne ainsi qu'une meilleure protéosynthèse microbienne mesurée en gramme d'azote par kilo de matières organiques digestibles et moins d'ammoniaque ruminal.

Ces deux activités combinées du complément alimentaire selon l'invention permettent donc avantageusement de maintenir le taux de protéines intestinales dans une plage de 35 à 45 % par rapport à l'ensemble des protéines dans la ration totale.

De plus, de manière très avantageuse, le complément alimentaire selon l'invention travaille dans le rumen, il y a donc effet sur toutes les protéines et l'amidon de la ration et non seulement sur l'aliment qui les comportent pour une valorisation de la ration totale.

De préférence, le complément selon l'invention comporte également au moins un sucre spécifique, de préférence d'origine végétale. Ces sucres naturels rentrant dans la composition du complément selon l'invention permettent après chauffage et passage à la presse de complexer la part protéine des aliments (effet de tannage) et surtout des tourteaux de protéagineux et de rendre ces protéines moins dégradable dans le rumen. Cet effet de tannage des protéines de la matière première est proportionnel à la dose du complément. Plus la dose est importante plus cet effet de tannage est important et améliore encore le taux de protéines by-pass de l'aliment.

De préférence, un complément alimentaire selon l'invention contient un mélange d'au moins deux huiles essentielles.

De préférence, les huiles essentielles utilisées sont choisies parmi les huiles essentielles telles que Trymol, Limonene, Guajacol, Eugenol, Vanillin, Anethol et Linanol.

Un complément alimentaire selon l'invention contient de préférence un mélange d'huiles essentielles tel que 10 à 40% de Thymol, 10 à 40% de Limonene, 5 à 20% de Guajacol, 5 à 20% d'Eugenol, 5 à 25% de Vanillin, 2 à 10 % d'Anethol, 2 à 10% de Linanol, exprimé par rapport à l'ensemble des huiles essentielles.

De préférence, les saponines utilisées sont d'origine végétale telles que Yucca schidigera, Quilaya saponaria et autres.

De préférence, les sucres spécifiques sont également d'origine végétale.

De préférence le rapport optimal entre les huiles essentielles et les saponines se trouve dans une plage de 4 à 8, de préférence voisin de 6. Ce rapport exprime la teneur des huiles essentielles par rapport aux saponines, par exemple le rapport pondéral dans le complément selon l'invention. Ainsi, le poids des huiles essentielles est, par exemple, 4 fois plus important que celui des saponines. Avantageusement, le complément alimentaire selon l'invention est constitué de composants naturels d'origine végétale et présente un support minéral.

On a pu observer que le complément alimentaire selon l'invention a les conséquences digestives suivantes :
- moins d'accumulation d'ammoniaque dans le rumen,
- moins d'ammoniaque dans le sang,
- plus de protéines et d'amidon « by pass »,
- moins d'acide lactique et de méthane dans le rumen,
- une meilleure digestibilité de la fibre du fourrage constituant l'aliment,
- amélioration des performances animales (production laitière, ingestion, croissance, qualité du lait).

L'invention vise également l'utilisation pour l'obtention d'un complément alimentaire pour la formulation des aliments pour animaux ruminants, comprenant au moins une huile essentielle, d'au moins une saponine en tant qu'agent actif en combinaison avec l'huile essentielle, dans le rumen de manière à maintenir un taux optimal de protéines ruminales se trouvant dans une plage de 55 à 65 % de l'ensemble des protéines dans la ration totale.

## Revendications

1. Utilisation d'un complément alimentaire comprenant au moins une huile essentielle et au moins une saponine, pour la formulation des aliments pour animaux ruminants en vue de prévenir les accidents métaboliques.

2. Utilisation selon la revendication 1, pour réduire la dégradabilité des protéines alimentaires dans le rumen de l'animal ruminant en vue de prévenir les accidents métaboliques.

3. Utilisation selon l'une des revendications 1 à 2, pour augmenter et/ou maintenir la part de protéines intestinales (part de by-pass) en vue de prévenir les accidents métaboliques.

4. Utilisation selon l'une des revendications 1 à 3, pour réduire la production d'ammoniaque dans le rumen et le sang de l'animal en vue de prévenir les accidents métaboliques.

5. Utilisation selon l'une des revendications 1 à 4, pour réduire le catabolisme des bactéries protéolytiques impliquées dans la dégradation des protéines alimentaires dans le rumen, en vue de prévenir les accidents métaboliques.

6. Utilisation selon l'une des revendications 1 à 5, pour baisser et/ou éliminer l'activité des protozoaires présentes dans le milieu animal en vue de prévenir les accidents métaboliques.

7. Utilisation selon l'une des revendications précédentes, dans laquelle le complément alimentaire comporte également au moins un sucre spécifique, de préférence d'origine végétale, pour rendre moins dégradable la part protéine des aliments dans le rumen.

8. Utilisation selon l'une des revendications précédentes, dans laquelle les saponines utilisées sont d'origine végétale.

9. Utilisation selon l'une des revendications précédentes, dans laquelle le complément alimentaire contient un mélange d'au moins deux huiles essentielles.

10. Utilisation selon l'une des revendications précédentes, dans laquelle les huiles essentielles sont choisies parmi les huiles essentielles telles que thymol, limonène, guaïacol, eugénol, vanilline, anéthol et linanol.

11. Utilisation selon l'une des revendications précédentes, dans Laquelle le complément alimentaire contient une mélange d'huiles essentielles tel que 10 à 40% de thymol, 10 à 40% de limonène, 5 à 20% de guaïacol, 5 à 20% d'eugénol, 5 à 25% de vanilline, 2 à 10% d'anéthol, 2 à 10% de linanol, exprimé par rapport à l'ensemble des huiles essentielles.

12. Utilisation selon l'une des revendications précédentes, dans laquelle le rapport optimal entre huiles essentielles et aux saponines se trouve dans une plage de 4 à 8, de préférence voisin de 6.

## Claims

1. The use of a feed supplement comprising at least one essential oil and at least one saponin, for formulating feed for ruminant animals with view to preventing metabolic accidents.

2. The use according to claim 1, for reducing the degradability of feed proteins in the rumen of the ruminant animal with view to preventing metabolic accidents.

3. The use according to one of claims 1 to 2, for increasing and/or maintaining the proportion of intestinal proteins (bypass proportion) with view to preventing metabolic accidents.

4. The use according to one of claims 1 to 3, for reducing the production of ammonia in the rumen and blood of the animal with view to preventing metabolic accidents.

5. The use according to one of claims 1 to 4, for reducing the catabolism of the proteolytic bacteria involved in the degradation of feed proteins in the rumen, with view to preventing metabolic accidents.

6. The use according to one of claims 1 to 5, for lowering and/or eliminating the protozoa present in the animal medium with view to preventing metabolic accidents.

7. The use according to one of the preceding claims, wherein the feed also includes at least one specific sugar, preferably of vegetable origin, in order to make the protein proportion of the feed in the rumen less degradable.

8. The use according to one of the preceding claims, wherein the saponins used are of vegetable origin.

9. The use according to one of the preceding claims, wherein the feed supplement contains a mixture of at least two essential oils.

10. The use according to one of the preceding claims, wherein the essential oils are selected from essential oils such as thymol, limonene, guaiacol, eugenol, vanillin, anethol and linanol.

11. The use according to one of the preceding claims, wherein the feed supplement contains a mixture of essential oils such as 10 to 40% of thymol, 10 to 40% of limonene, 5 to 20% of guaiacol, 5 to 20% of eugenol, 5 to 25% of vanillin, 2 to 10% of anethol, 2 to 10% of linanol, expressed on the basis of the whole of the essential oils.

12. The use according to one of the preceding claims, wherein the optimum ratio between essential oils and saponins is in a range from 4 to 8, preferably close to 6.

## Patentansprüche

1. Verwendung einer Nahrungsergänzung, die zur Formulierung von Nahrung für Wiederkäuer mindestens ein ätherisches Öl und mindestens ein Saponin umfasst, um Stoffwechselstörungen vorzubeugen.

2. Verwendung nach Anspruch 1, um die Abbaubarkeit der Nahrungsproteine im Pansen des Wiederkäuers zu reduzieren, um Stoffwechselstörungen vorzubeugen.

3. Verwendung nach einem der Ansprüche 1 bis 2, um den Anteil der Darmproteine (Bypass-Anteil) zu erhöhen und/oder beizubehalten, um Stoffwechselstörungen vorzubeugen.

4. Verwendung nach einem der Ansprüche 1 bis 3, um die Ammoniakproduktion im Pansen und im Blut des Tiers zu reduzieren, um Stoffwechselstörungen vorzubeugen.

5. Verwendung nach einem der Ansprüche 1 bis 4, um den Katabolismus der proteolytischen Bakterien, die am Abbau der Nahrungsproteine im Pansen beteiligt sind, zu reduzieren, um Stoffwechselstörungen vorzubeugen.

6. Verwendung nach einem der Ansprüche 1 bis 5, um die Aktivität der im tierischen Milieu vorhandenen Protozoen zu senken und/oder zu verhindern, um Stoffwechselstörungen vorzubeugen.

7. Verwendung nach einem der vorangehenden Ansprüche, wobei die Nahrungsergänzung ebenfalls mindestens einen spezifischen Zucker, vorzugsweise pflanzlichen Ursprungs, aufweist, um den Proteinanteil der Nahrung im Pansen weniger abbaubar zu gestalten.

8. Verwendung nach einem der vorangehenden Ansprüche, wobei die verwendeten Saponine pflanzlichen Ursprungs sind.

9. Verwendung nach einem der vorangehenden Ansprüche, wobei die Nahrungsergänzung ein Gemisch von mindestens zwei ätherischen Ölen enthält.

10. Verwendung nach einem der vorangehenden Ansprüche, wobei die ätherischen Öle aus den ätherischen Ölen wie Thymol, Limonen, Guajacol, Eugenol, Vanillin, Anethol und Linanol ausgewählt sind.

11. Verwendung nach einem der vorangehenden Ansprüche, wobei die Nahrungsergänzung ein Gemisch ätherischer Öle wie zum Beispiel 10 bis 40 % Thymol, 10 bis 40 % Limonen, 5 bis 20 % Guajacol, 5 bis 20 % Eugenol, 5 bis 25 % Vanillin, 2 bis 10 % Anethol, 2 bis 10 % Linanol enthält, ausgedrückt im Verhältnis zur Gesamtheit der ätherischen Öle.

12. Verwendung nach einem der vorangehenden Ansprüche, wobei das optimale Verhältnis zwischen den ätherischen Ölen und Saponinen in einem Bereich von 4 bis 8, vorzugsweise in der Nähe von 6, liegt.
